# EUROPEAN PATENT SPECIFICATION

(11) **EP 2 757 133 B1**
(45) Date of publication and mention of the grant of the patent: **28.12.2016**
(21) Application number: 12832547.9
(22) Date of filing: 07.09.2012
(51) Int. Cl.: C09D 11/10, B41C 1/10, C09D 11/101, C09D 11/30

(54) **UV-CURABLE INK FOR DIRECT PLATE MAKING BY INK-JET PRINTING WITH PREPARATION METHOD AND APPLICATION THEREFOR**
UV-HÄRTBARE TINTE ZUR DIREKTEN PLATTENHERSTELLUNG DURCH TINTENSTRAHLDRUCK, HERSTELLUNGSVERFAHREN UND ANWENDUNG DAFÜR
ENCRE À SÉCHAGE ULTRAVIOLET POUR SYSTÈME DIRECT À LA PLAQUE PAR IMPRESSION PAR JET D'ENCRE, AINSI QUE SON PROCÉDÉ DE PRÉPARATION ET SON APPLICATION

(30) Priority: 14.09.2011 CN 201110271845
(43) Date of publication of application: 23.07.2014
(73) Proprietor: Institute Of Chemistry, Chinese Academy Of Sciences, Beijing 100190 (CN)
(72) Inventor: QIN, Ming-ming, Beijing 100190 (CN); ZHOU, Haihua, Beijing 100190 (CN); LI, Yingfeng, Beijing 100190 (CN); SONG, Yanlin, Beijing 100190 (CN)
(74) Representative: Petraz, Gilberto Luigi
(86) International application number: PCT/CN2012/081105
(87) International publication number: WO 2013/037277

(56) References cited:
- CN-A- 1 504 326
- CN-A- 102 161 848
- JP-A- 2006 232 989
- US-A1- 2004 163 570
- US-A1- 2005 245 633
- US-A1- 2010 256 254

## Description

### Field of the Invention

The present invention relates to the field of ink for printing plate making, in particular to a UV-curable ink for direct plate making by ink-jet printing technique, and a preparation method and an application of the same.

### Background of the Invention

Direct plate-making by ink-jet printing technique is a plate making technique utilizing an inkjet printer to spray the ink onto a surface of a metal substrate or a polymer substrate to form an oleophilic graphic region, while the unsprayed region is a hydrophilic non-graphic region, thereby realizing printing through the hydrophilic and oleophilic contrast between the graphic region and the non-graphic region. Direct plate-making by ink-jet printing technique avoids the post-treatment procedures such as exposure, development, and fixation, etc., and the obtained printing plates are proved as having high resolution and high durability. At present, inks for direct plate-making by ink-jet printing are usually of solvent-type ink. As disclosed in Chinese Patent Application No. 200710118701.5, an ink for plate making is directly printed by an inkjet printer onto a blank substrate to produce a printing plate; however, the printing plates produced by the technique show poor durability, and the substrates printed with images will produce organic solvent gas when heated, causing pollution to the environment. At present, the inks for direct plate-making by ink-jet printing include wear-resistant ink comprising nanometer particles (Chinese Patent Application No. 200610011820.6) and ink comprising oleophylic cross-linkable resin and nanometer dye (Chinese Patent Application No. 200810239165.9). The inks disclosed by the above two patent applications improve the wear-resistibility and resolution of images, and durability of the printing plate. However, the inks have to be dried at higher temperature owing to the low volatility of the solvent contained. Moreover, during the printing process, the images in the graphic region on the printing plate may be wiped off when cleaned by an alcohol-containing cleaning paste for plate, causing degraded printing quality; consequently, it is difficult to improve the durability of the printing plate, and image resolution is affected adversely. Therefore, it is of crucial importance to develop an ink for direct plate-making by ink-jet printing with satisfactory adhesion to the substrate, which is curable at low temperature or photo-curable, in order to further improve curing speed of the printing plate, shorten production time, improve the adaptability and durability of printing plate and resolution of image.

### Summary of the Invention

Embodiments described herein relate to an ultraviolet (UV) curable ink for direct plate-making by ink-jet printing.

Further embodiments described herein relate to a preparation method of the UV-curable ink for direct plate-making by ink-jet printing.

According to the present invention, a method is provided for direct printing plate-making by ink-jet printing. The method comprises:
spraying a UV-curable ink through an inkjet printer onto surface of a blank substrate or a substrate with coating to form images, so as to obtain a sprayed blank substrate or a sprayed substrate with coating, and
curing the sprayed blank substrate or the sprayed substrate with coating under ultraviolet light with a wavelength in range of 300-450 nm for 1-60 s, so as to obtain a printing plate.

The UV-curable ink for direct plate-making by ink-jet printing according to the present application, based on total weight of the UV-curable ink, consists of:

| | |
|---|---|
| monomer with UV-reactive groups | 20-90 wt% |
| acrylate-based prepolymer | 1-40 wt% |
| photoinitiator | 0.1-5 wt% |
| colorant | 0.01-5 wt% |
| dispersant | balance |

The monomer with UV-reactive groups is at least one selected from the group consisting of acryloylmorpholine, mono-functional acrylate-based monomer, bi-functional acrylate-based monomer, and multi-functional acrylate-based monomer. In the present invention, the mono-functional acrylate-based monomer refers to an acrylate-based monomer containing one UV-reactive group, the bi-functional acrylate-based monomer refers to an acrylate-based monomer containing two UV-reactive groups, and the multi-functional acrylate-based monomer refers to an acrylate-based monomer containing three or more UV-reactive groups.

The mono-functional acrylate-based monomer is at least one selected from the group consisting of hydroxyethyl acrylate, hydroxypropyl acrylate, lauryl acrylate, octadecyl acrylate, 2-ethylhexyl acrylate, butyl acrylate, ethoxylated cyclohexyl acrylate, isobornyl acrylate, epoxy acrylate, ethyl ethoxy-acrylate, neopentyl glycol benzoate acrylate, 2-phenoxy-ethyl methacrylate, and nonyl-phenoxy polyethylene glycol acrylate.

The bi-functional acrylate-based monomer is at least one selected from the group consisting of polyethylene glycol (200) diacrylate, polyethylene glycol (400) diacrylate, polyethylene glycol (600) diacrylate, tripropylene glycol diacrylate, dipropylene glycol diacrylate, propylene glycol diacrylate, neopentyl glycol diacrylate, propoxylated (2) neopentyl glycol diacrylate, 1,3-butanediol diacrylate, phthalate diglycol diacrylate, phthalate tripropylene glycol diacrylate, ethylene glycol diacrylate, diethylene glycol diacrylate, triethylene glycol diacrylate, tetraethylene glycol diacrylate, 1,6-hexanediol diacrylate, ethoxylated 1,6- hexanediol diacrylate, 1,4-butanediol diacrylate, and ethoxylated (4) bisphenol A diacrylate.

The multi-functional acrylate-based monomer is at least one selected from the group consisting of trimethylolpropane triacrylate, ethylene oxide-modified trimethylolpropane triacrylate, ethoxylated trimethylolpropane triacrylate, propoxylated trimethylolpropane triacrylate, propoxylated (3) glycerol triacrylate, pentaerythritol tetraacrylate, pentaerythritol triacrylate, and dipentaerythritol pentaacrylate. According to possible implementations, the ethylene oxide-modified trimethylolpropane triacrylate is obtained by contacting ethylene oxide and trimethylolpropane triacrylate under an alkaline condition, wherein the molar ratio of ethylene oxide to trimethylolpropane triacrylate may be 3-9 : 1, and the temperature of the contact may be any ordinary choice, such as 50-100°C.

The acrylate-based prepolymer can increase the strength of the ink layer formed ultimately, and can be any ordinary choice in the art. Specifically, the acrylate-based prepolymer may be at least one selected from the group consisting of polyurethane acrylate prepolymer, polyester acrylate prepolymer, polyether acrylate prepolymer, hyperbranched acrylate-based prepolymer, and epoxy acrylate prepolymer. The polyurethane acrylate prepolymer refers to a prepolymer containing acrylic functional groups and carbamate functional groups, and can be prepared by a conventional method; for example, by copolymerization of carbamate oligomer having isocyanate groups with acrylic-based monomer or acrylic-based oligomer. The polyester acrylate prepolymer refers to a prepolymer containing acrylic functional groups and ester groups, which can be any ordinary polyester acrylate prepolymer; for example, a prepolymer obtained by the copolymerization of polyester oligomer with acrylic-based monomer or acrylic-based oligomer. The polyether acrylate prepolymer refers to a prepolymer containing ether bonds and acrylic functional groups, and can be obtained by copolymerization of polyether oligomer with acrylic-based monomer or acrylic-based oligomer. The epoxy acrylate prepolymer refers to a prepolymer obtained by copolymerization of epoxy resin with acrylate-based monomer or acrylate-based oligomer. The hyperbranched acrylate-based prepolymer can be any ordinary acrylate-based prepolymer having branched or dendritic structures, and there is no specific restriction.

The photoinitiator may be at least one selected from the group consisting of benzoin isobutyl ether, benzoin ethyl ether, 2,4-diethyl acetophenone, 2-isopropyl acetophenone, diethyl 2,4,6-trimethyl benzoyl phosphate, diphenyl 2,4,6-trimethylbenzoyl phosphine oxide, diphenyl 6-trimethylbenzoyl phosphine oxide, 2-phenyl-2,2-dimethylamino-1-(4-morpholinyl phenyl)-1-butanone, di(2,4,6-trimethylbenzoyl) phenyl phosphine oxide, di(2,6-dimethoxy benzoyl)-(4',4'-dimethyl octyl-2) phosphine oxide, di(2,6-dimethoxy benzoyl)-2,4,4-trimethyl pentyl phosphine oxide, 1-hydroxy-cyclohexyl phenyl ketone, phenyl dimethyl ketal, 2-hydroxy-2-methylphenyl acetone, 2-hydroxy-2-methyl-*p*-ethoxyl ether phenyl acetone, 1-(4-isopropyl phenyl)-2-hydroxy-2-methyl acetone, 4-*p*-toluenethio benzophenone, 2-methyl-1-(4-methylthio phenyl)-2-morpholine-1-acetone, 2,2-dimethoxy benzophenone, 2-isopropyl thioxanthone, benzophenone, 2,4,6-trimethyl benzophenone, 4-methyl benzophenone, 4-phenyl benzophenone, 4,4'-di(dimethylamino) benzophenone, 4,4'-di(diethylamino) benzophenone, 2-methyl formate benzophenone, 2,4-diethyl thioxanthone, 2-chlorothioxanthone, and 2-ethyl anthraquinone.

According to embodiments, the colorant is pigment or dye.

The pigment may be one selected from the group consisting of yellow-1, yellow-3, yellow-12, yellow-13, yellow-14, yellow-17, yellow-42, yellow-74, yellow-81, yellow-83, yellow-87, yellow-93, yellow-95, yellow-109, yellow-120, yellow-128, yellow-138, yellow-139, yellow-150, yellow-151, yellow-166, yellow-180, yellow-185, orange-16, orange-36, orange-38, red-5, red-22, red-38, red-48:1, red-48:2, red-48:4, red-49:1, red-53:1, red-57:1, red-63:1, red-101, red-122, red-144, red-146, red-177, red-185, purple-19, purple -23, blue-15:1, blue-15:3, blue-15:4, blue-18, blue-27, blue-19, blue-60, green-7, green-36, white-6, white-18, white-21, and black-7, etc.

The dye may be one selected from the group consisting of oil yellow, oil red G, oil purplish red, oil blue B, oil blue, solvent blue RS, aniline black, oil black, solvent black 827, and solvent black 834, etc.

The dispersant may be aliphatic amine-based dispersant, alcohol amine-based dispersant, unsaturated cyclic amine-based dispersant, aliphatic acid-based dispersant, aliphatic amide-based dispersant, ester-based dispersant, polymer-based dispersant (e.g., acrylate-based dispersant and polyester-based dispersant), hydroxyalkyl ammonium-based dispersant with acidic groups, and alkyl ammonium-based dispersant, etc. Specifically, the dispersant may be at least one selected from the group consisting of Disperbyk 101, Disperbyk 107, Disperbyk 110, Disperbyk 111, Disperbyk 130, Disperbyk 161, Disperbyk 162, Disperbyk 163, Disperbyk 164, Disperbyk 165, Disperbyk 166, Disperbyk 168, Disperbyk 170, Disperbyk 180, Disperbyk 400, Disperbyk 9076, Disperbyk 9077, Efka 44, Efka 46, Efka 47, Efka 48, Efka 49, Efka 54, Efka 63, Efka 64, Efka 65, Efka 66, Efka 71, Efka 701, Efka 766, Solsperse 5000, Solsperse 13940, Solsperse 17000, Solsperse 22000, Solsperse 24000, Solsperse 32000, Solsperse 33000, Solsperse 39000, Solsperse 41000, and Solsperse 53000.

The preparation method of UV-curable ink for direct plate-making by ink-jet printing according to embodiments described herein comprises the following steps: based on total weight of the UV curable ink, 20-90 wt% of monomer with UV-reactive groups, 1-40 wt% acrylate-based prepolymer, 0.1-5 wt% of photoinitiator, 0.01-5 wt% of colorant, and balance of dispersant are mixed; then obtained mixture is ground (usually for 2-15 h) and filtered to obtain a filtrate as the UV-curable ink.

The filter may adopt multi-stage filter. The multi-stage filter may adopt a filter membrane to filter the mixture for many times, or adopt sand core funnel and filter membrane to filter the mixture in sequence, and preferably adopts sand core funnel and filter membrane to filter the mixture in sequence. Specifically, filtering the mixture with sand core funnel to remove impurity and/or insolubles, and then filtering with micron pore-sized filter membrane to remove minor impurity and/or insolubles, and the obtained filtrate is the UV-curable ink of the present invention.

As for the filter by the sand core funnel, the preferred filtering scheme is to adopt a glass sand core funnel with a pore size of 20-30 microns (G1-type glass sand core funnel) to perform the filter firstly, and then adopt a glass sand core funnel with a pore size of 3-4 microns (G4-type glass sand core funnel) to perform the filter.

As for the filter by the micron pore-sized filter membrane, the preferred filtering scheme is to adopt a polytetrafluoroethylene micro-porous membrane with a pore size of 0.3-0.5 micron to perform the filter firstly, and then adopt a polytetrafluoroethylene micro-porous membrane with a pore size of 0.15-0.25 micron to perform the filter.

All the raw materials involved in the UV-curable ink of the present invention are those well-known in the art or those commercially available. The UV-curable ink for direct plate-making by ink-jet printing prepared by the method of the present invention can be used to spray through an inkjet printer onto surface of a blank substrate or a substrate with coating to form images, and then the sprayed blank substrate or substrate with coating may be cured under ultraviolet light with a wavelength in range of 300-450 nm for 1-60 s, so as to obtain a printing plate. The curing speed is high. The obtained printing plate shows favorable printing adaptability and high durability when used for printing; moreover, the resolution of the obtained prints can be up to 150 lpi.

### Detailed Description of the Embodiments

### Example 1

Based on total weight of UV-curable ink, 40 wt% of hydroxypropyl acrylate, 40 wt% of polyurethane acrylate prepolymer (purchased from Shenzhen Dinghao Actinic Technology Co., Ltd., with trademark as DH-317), 0.1 wt% of benzoin isobutyl ether, 0.01 wt% of pigment purple-19, and balance of Disperbyk 101 (purchased from BYK-Chemie Inc., Germany) are mixed; the mixture is ground in a grinding machine at room temperature for 2 h, and then is filtered through multi-stage filter to obtain a filtrate, which is the UV-curable ink.

### Example 2

Based on total weight of UV-curable ink, 90 wt% of butyl acrylate, 1 wt% of polyester acrylate prepolymer (purchased from Shanghai ShuaiKe Chemical Co., Ltd., with trademark as SK 8924), 5 wt% of 2-isopropyl acetophenone, 2 wt% of pigment black-7, and balance of Efka 44 (purchased from EFKA Additives B.V., Netherlands) are mixed; the mixture is ground in a grinding machine at room temperature for 15 h, and then is filtered through multi-stage filter to obtain a filtrate, which is the UV-curable ink.

### Example 3

Based on total weight of UV-curable ink, 50 wt% of acryloylmorpholine, 40 wt% of pentaerythritol tetraacrylate, 5 wt% of polyurethane acrylate prepolymer (purchased from Shenzhen Dinghao Actinic Technology Co., Ltd., with trademark as DH-317), 1 wt% of 2,4-diethyl thioxanthone, 2 wt% of oil black, and balance of Efka 46 (purchased from EFKA Additives B.V., Netherlands) are mixed; the mixture is ground in a grinding machine at room temperature for 10 h, and then is filtered through multi-stage filter to obtain a filtrate, which is the UV-curable ink.

### Example 4

Based on total weight of UV-curable ink, 38 wt% of dipropylene glycol diacrylate, 40 wt% of polyether acrylate prepolymer (purchased from Rahn Inc., Switzerland, with trademark as GENOMER 3364), 0.2 wt% of 2-hydroxy-2-methylphenyl acetone, 0.03 wt% of oil blue B, and balance of Solsperse 5000 (purchased from ICI Inc.) are mixed; the mixture is ground in a grinding machine at room temperature for 5 h, and then is filtered through a polytetrafluoroethylene micro-porous filter membrane with a pore size of 0.3-0.5 µm and a polytetrafluoroethylene micro-porous filter membrane with a pore size of 0.15-0.25 µm in sequence to obtain a filtrate, which is the UV-curable ink.

### Example 5

Based on total weight of UV-curable ink, 56 wt% of neopentyl glycol diacrylate, 25 wt% of hyperbranched acrylate prepolymer (purchased from Sartomer Inc., USA, with trademark as CN2302), 3 wt% of 2-methyl-1-(4-methylthio phenyl)-2-morpholine-1-acetone, 0.06 wt% of solvent black 827, and balance of Disperbyk 107 (purchased from BYK-Chemie Inc., Germany) are mixed; the mixture is ground in a grinding machine at room temperature for 13 h, and then is filtered through a glass sand core funnel (G1-type) with a pore size of 20-30 µm and a glass sand core funnel (G4-type) with a pore size of 3-4 µm in sequence to obtain a filtrate, which is the UV-curable ink.

### Example 6

Based on total weight of UV-curable ink, 85 wt% of ethylene oxide-modified trimethylolpropane triacrylate (prepared by reacting ethylene oxide with trimethylolpropane triacrylate in a molar ratio of 5 : 1 at 75°C for 4 h), 6 wt% of epoxy acrylate prepolymer (purchased from Dongtou Hengli Printing Materials Co., Ltd., with trademark as HL-103), 0.1 wt% of diphenyl 2,4,6-trimethylbenzoyl phosphine oxide, 0.05 wt% of pigment blue-15:1, and balance of Solsperse 13940 (purchased from ICI Inc.) are mixed; the mixture is ground in a grinding machine at room temperature for 14 h, and then is filtered through multi-stage filter to obtain a filtrate, which is the UV-curable ink.

### Example 7

Based on total weight of UV-curable ink, 65 wt% of lauryl acrylate, 25 wt% of hyperbranched acrylate prepolymer (purchased from Sartomer Inc., USA, with trademark as CN2302), 0.5 wt% of 2-isopropyl thioxanthone, 1 wt% pigment purple-19, and balance of Efka 46 (purchased from EFKA Additives B.V., Netherlands) are mixed; the mixture is ground in a grinding machine at room temperature for 6 h, and then is filtered through multi-stage filter to obtain a filtrate, which is the UV-curable ink.

### Example 8

Based on total weight of UV-curable ink, 60 wt% of phthalate diglycol diacrylate, 35 wt% of polyester acrylate prepolymer (purchased from Shanghai ShuaiKe Chemical Co., Ltd., with trademark as SK8924), 0.6 wt% of 2-ethyl anthraquinone, 0.5 wt% of aniline black, and balance of Disperbyk 111 (purchased from BYK-Chemie Inc., Germany) are mixed; the mixture is ground in a grinding machine at room temperature for 4 h, and then is filtered through multi-stage filter to obtain a filtrate, which is the UV-curable ink.

### Example 9

Based on total weight of UV-curable ink, 82 wt% of polyethylene glycol (400) diacrylate, 15 wt% of polyurethane acrylate prepolymer (purchased from Shenzhen Dinghao Actinic Technology Co., Ltd., with trademark as DH-317), 0.3 wt% of benzoin isobutyl ether, 0.03 wt% of pigment orange-16, and balance of Disperbyk 400 (purchased from BYK-Chemie Inc., Germany) are mixed; the mixture is ground in a grinding machine at room temperature for 11 h, and then is filtered through multi-stage filter to obtain a filtrate, which is the UV-curable ink.

### Example 10

Based on total weight of UV-curable ink, 82 wt% of tripropylene glycol diacrylate, 15 wt% of polyether acrylate prepolymer (purchased from Rahn Inc., Switzerland, with trademark as GENOMER 3364), 0.8 wt% of diethyl 2,4,6-trimethylbenzoyl phosphate, 0.06 wt% of oil black, and balance of Efka 66 (purchased from EFKA Additives B.V., Netherlands) are mixed; the mixture is ground in a grinding machine at room temperature for 9 h, and then is filtered through a glass sand core funnel (G1-type) with a pore size of 20-30 µm and a glass sand core funnel (G4-type) with a pore size of 3-4 µm in sequence to obtain a filtrate, which is the UV-curable ink.

### Example 11

Based on total weight of UV-curable ink, 45 wt% of hydroxyethyl acrylate, 45 wt% of propylene glycol diacrylate, 1 wt% of epoxy acrylate prepolymer (purchased from Dongtou Hengli Printing Materials Co., Ltd., with trademark as HL-103), 2 wt% of 1-hydroxy-cyclohexyl phenyl ketone, 0.09 wt% of oil blue, and balance of Solsperse 17000 (purchased from ICI Inc.) are mixed; the mixture is ground in a grinding machine at room temperature for 8 h, and then is filtered through a polytetrafluoroethylene micro-porous filter membrane with a pore size of 0.3-0.5 µm and a polytetrafluoroethylene micro-porous filter membrane with a pore size of 0.15-0.25 µm in sequence to obtain a filtrate, which is the UV-curable ink.

### Example 12

Based on total weight of UV-curable ink, 45 wt% of 2-ethylhexyl acrylate, 25 wt% of trimethylolpropane triacrylate, 20 wt% of hyperbranched acrylate prepolymer (purchased from Sartomer Inc., USA, with trademark as CN2302), 3 wt% of di(2,6-dimethoxy benzoyl)-2,4,4-trimethyl pentyl phosphine oxide, 1 wt% of solvent blue RS, and balance of Disperbyk 9076 (purchased from BYK-Chemie Inc., Germany) are mixed; the mixture is ground in a grinding machine at room temperature for 10 h, and then is filtered through a polytetrafluoroethylene micro-porous filter membrane with a pore size of 0.3-0.5 µm and a polytetrafluoroethylene micro-porous filter membrane with a pore size of 0.15-0.25 µm in sequence to obtain a filtrate, which is the UV-curable ink.

### Example 13

Based on total weight of UV-curable ink, 40 wt% of 2-phenoxy-ethyl methacrylate, 20 wt% of neopentyl glycol diacrylate, 25 wt% of polyether acrylate prepolymer (purchased from Rahn Inc., Switzerland, with trademark as GENOMER 3364), 3 wt% 2,4,6-trimethyl benzophenone, 4 wt% of pigment blue-18, and balance of Efka 766 (purchased from EFKA Additives B.V., Netherlands) are mixed; the mixture is ground in a grinding machine at room temperature for 12 h, and then is filtered through multi-stage filter to obtain a filtrate, which is the UV-curable ink.

### Example 14

Based on total weight of UV-curable ink, 61 wt% of nonyl-phenoxy polyethylene glycol acrylate, 35 wt% of polyester acrylate prepolymer (purchased from Shanghai ShuaiKe Chemical Co., Ltd., with trademark as SK8924), 1 wt% of 2,4-diethyl thioxanthone, 2.5 wt% of pigment black-7, and balance of Disperbyk 400 (purchased from BYK-Chemie Inc., Germany) are mixed; the mixture is ground in a grinding machine at room temperature for 10 h, and then is filtered through multi-stage filter to obtain a filtrate, which is the UV-curable ink.

### Example 15

Based on total weight of UV-curable ink, 10 wt% of 1,3-butanediol diacrylate, 15 wt% of octadecyl acrylate, 30 wt% of polyurethane acrylate prepolymer (purchased from Shenzhen Dinghao Actinic Technology Co., Ltd., with trademark as DH-317), 40 wt% of propoxylated (3) glycerol triacrylate, 2 wt% of 2-methyl formate benzophenone, 0.5 wt% of oil purplish red, and balance of Efka 54 (purchased from EFKA Additives B.V., Netherlands) are mixed; the mixture is ground in a grinding machine at room temperature for 3 h, and then is filtered through a glass sand core funnel (G1-type) with a pore size of 20-30 µm and a glass sand core funnel (G4-type) with a pore size of 3-4 µm in sequence to obtain a filtrate, which is the UV-curable ink.

### Example 16

Based on total weight of UV-curable ink, 48 wt% of 1,3-butanediol diacrylate, 12 wt% of pentaerythritol tetraacrylate, 25 wt% of polyether acrylate prepolymer (purchased from Rahn Inc., Switzerland, with trademark as GENOMER 3364), 2.5 wt% of 2-hydroxy-2-methyl-*p*-ethoxyl ether phenyl acetone, 2 wt% of pigment purple-23, and balance of Disperbyk 168 (purchased from BYK-Chemie Inc., Germany) are mixed; the mixture is ground in a grinding machine at room temperature for 4 h, and then is filtered through multi-stage filter to obtain a filtrate, which is the UV-curable ink.

### Example 17

Based on total weight of UV-curable ink, 25 wt% of phthalate diglycol diacrylate , 10 wt% of ethoxylated cyclohexyl acrylate, 35 wt% of phthalate tripropylene glycol diacrylate, 2 wt% of dipentaerythritol pentaacrylate, 20 wt% of epoxy acrylate prepolymer (purchased from Dongtou Hengli Printing Materials Co., Ltd., with trademark as HL-103), 0.8 wt% of di(2,6-dimethoxy benzoyl)-(4',4'-dimethyl octyl-2) phosphine oxide, 1.5 wt% of solvent black 834, and balance of Solsperse 53000 (purchased from ICI Inc.) are mixed; the mixture is ground in a grinding machine at room temperature for 6 h, and then is filtered through multi-stage filter to obtain a filtrate, which is the UV-curable ink.

The multi-stage filter described in above Examples is carried out as follows: the mixture is filtered through a glass sand core funnel (G1-type) with a pore size of 20-30 µm first, and then is filtered through a glass sand core funnel (G4-type) with a pore size of 3-4 µm; next, the mixture is filtered through a polytetrafluoroethylene micro-porous filter membrane with a pore size of 0.3-0.5 µm and a polytetrafluoroethylene micro-porous filter membrane with a pore size of 0.15-0.25 µm in sequence.

The UV-curable inks for direct plate-making by ink-jet printing prepared in the Examples 1-17 are sprayed through an inkjet printer onto surface of a blank substrate or substrate with coating respectively to form images, and then the sprayed blank substrate or substrate with coating is cured under ultraviolet light with a wavelength of 300-450 nm for 1∼60 s, so as to obtain a printing plate. The obtained printing plate can be cured at a high curing speed. The printing plate shows high printing adaptability and high durability when used for printing in a printing machine. In addition, the resolution of the obtained prints can be up to 150 lpi.

## Claims

1. A method for direct printing plate-making by ink-jet printing, comprising:
spraying a UV-curable ink through an inkjet printer onto surface of a blank substrate or a substrate with coating to form images, so as to obtain a sprayed blank substrate or a sprayed substrate with coating, and
curing the sprayed blank substrate or the sprayed substrate with coating under ultraviolet light with a wavelength in range of 300-450 nm for 1-60 s, so as to obtain a printing plate,
wherein, based on total weight of the UV-curable ink, the UV-curable ink consists of:
| | |
|---|---|
| monomer with UV-reactive groups | 20-90 wt% |
| acrylate-based prepolymer | 1-40 wt% |
| photoinitiator | 0.1-5 wt% |
| colorant | 0.01-5 wt% |
| dispersant | balance |
the monomer with UV-reactive groups is at least one selected from the group consisting of acryloylmorpholine, mono-functional acrylate-based monomer,
bi-functional acrylate-based monomer, and multi-functional acrylate-based monomer,
the mono-functional acrylate-based monomer is at least one selected from the group consisting of hydroxyethyl acrylate, hydroxypropyl acrylate, lauryl acrylate, octadecyl acrylate, 2-ethylhexyl acrylate, butyl acrylate, ethoxylated cyclohexyl acrylate, isobornyl acrylate, epoxy acrylate, ethyl ethoxy-acrylate, neopentyl glycol benzoate acrylate, 2-phenoxy-ethyl methacrylate, and nonyl-phenoxy polyethylene glycol acrylate;
the bi-functional acrylate-based monomer is at least one selected from the group consisting of polyethylene glycol (200) diacrylate, polyethylene glycol (400) diacrylate, polyethylene glycol (600) diacrylate, tripropylene glycol diacrylate, dipropylene glycol diacrylate, propylene glycol diacrylate, neopentyl glycol diacrylate, propoxylated (2) neopentyl glycol diacrylate, 1,3-butanediol diacrylate, phthalate diglycol diacrylate, phthalate tripropylene glycol diacrylate, ethylene glycol diacrylate, diethylene glycol diacrylate, triethylene glycol diacrylate, tetraethylene glycol diacrylate, 1,6-hexanediol diacrylate, ethoxylated 1,6-hexanediol diacrylate, 1,4-butanediol diacrylate, and ethoxylated (4) bisphenol A diacrylate;
the multi-functional acrylate-based monomer is at least one selected from the group consisting of trimethylolpropane triacrylate, ethylene oxide-modified trimethylolpropane triacrylate, ethoxylated trimethylolpropane triacrylate, propoxylated trimethylolpropane triacrylate, propoxylated (3) glycerol triacrylate, pentaerythritol tetraacrylate, pentaerythritol triacrylate, and dipentaerythritol pentaacrylate.

2. The method according to claim 1, wherein the acrylate-based prepolymer is at least one selected from the group consisting of polyurethane acrylate prepolymer, polyester acrylate prepolymer, polyether acrylate prepolymer, hyperbranched acrylate-based prepolymer, and epoxy acrylate prepolymer.

3. The method according to claim 1, wherein the photo initiator is at least one selected from the group consisting of benzoin isobutyl ether, benzoin ethyl ether, 2,4-diethyl acetophenone, 2-isopropyl acetophenone, diethyl 2,4,6-trimethyl benzoyl phosphate, diphenyl 2,4,6-trimethylbenzoyl phosphine oxide, diphenyl 6-trimethylbenzoyl phosphine oxide, 2-phenyl-2,2-dimethylamino-1-(4-morpholinyl phenyl)-1-butanone, di(2,4,6-trimethylbenzoyl) phenyl phosphine oxide, di(2,6-dimethoxy benzoyl)-(4',4'-dimethyl octyl-2) phosphine oxide, di(2,6-dimethoxy benzoyl)-2,4,4-trimethyl pentyl phosphine oxide, 1-hydroxy-cyclohexyl phenyl ketone, phenyl dimethyl ketal, 2-hydroxy-2-methylphenyl acetone, 2-hydroxy-2-methyl-*p*-ethoxyl ether phenyl acetone, 1-(4-isopropyl phenyl)-2-hydroxy-2-methyl acetone, 4-*p*-toluenethio benzophenone, 2-methyl-1-(4-methylthio phenyl)-2-morpholine-1-acetone, 2,2-dimethoxy benzophenone, 2-isopropyl thioxanthone, benzophenone, 2,4,6-trimethyl benzophenone, 4-methyl benzophenone, 4-phenyl benzophenone, 4,4'-di(dimethylamino) benzophenone, 4,4,-di(diethylamino) benzophenone, 2-methyl formate benzophenone, 2,4-diethyl thioxanthone, 2-chlorothioxanthone, and 2-ethyl anthraquinone.

4. The method according to claim 1, wherein the colorant is pigment or dye.

5. The method according to claim 4, wherein the pigment is one selected from the group consisting of yellow-1, yellow-3, yellow-12, yellow-13, yellow-14, yellow-17, yellow-42, yellow-74, yellow-81, yellow-83, yellow-87, yellow-93, yellow-95, yellow-109, yellow-120, yellow-128, yellow-138, yellow-139, yellow-150, yellow-151, yellow-166, yellow-180, yellow-185, orange-16, orange-36, orange-38, red-5, red-22, red-38, red-48:1, red-48:2, red-48:4, red-49:1, red-53:1, red-57:1, red-63:1, red-101, red-122, red-144, red-146, red-177, red-185, purple-19, purple-23, blue-15:1, blue-15:3, blue-15:4, blue-18, blue-27, blue-19, blue-60, green-7, green-36, white-6, white-18, white-21, and black-7;
the dye is one selected from the group consisting of oil yellow, oil red G, oil purplish red, oil blue B, oil blue, solvent blue RS, aniline black, oil black, solvent black 827, and solvent black 834.

6. The method according to claim 1, wherein the dispersant is at least one selected from the group consisting of Disperbyk 101, Disperbyk 107, Disperbyk 110, Disperbyk 111, Disperbyk 130, Disperbyk 161, Disperbyk 162, Disperbyk 163, Disperbyk 164, Disperbyk 165, Disperbyk 166, Disperbyk 168, Disperbyk 170, Disperbyk 180, Disperbyk 400, Disperbyk 9076, Disperbyk 9077, Efka 44, Efka 46, Efka 47, Efka 48, Efka 49, Efka 54, Efka 63, Efka 64, Efka 65, Efka 66, Efka 71, Efka 701, Efka 766, Solsperse 5000, Solsperse 13940, Solsperse 17000, Solsperse 22000, Solsperse 24000, Solsperse 32000, Solsperse 33000, Solsperse 39000, Solsperse 41000, and Solsperse 53000.

## Patentansprüche

1. Verfahren zum Herstellen von Direktdruckplatten mittels Tintenstrahldrucken, aufweisend:
Sprühen einer UV-aushärtbaren Tinte durch einen Tintenstrahldrucker auf die Fläche eines leeren Substrats oder eines Substrats mit Beschichtung, um Bilder zu bilden, um ein besprühtes leeres Substrat oder ein besprühtes Substrat mit Beschichtung zu erhalten, und
Aushärten des besprühten leeren Substrats oder des besprühten Substrats mit Beschichtung unter ultraviolettem Licht mit einer Wellenlänge im Bereich von 300 bis 450 nm für 1 bis 60 s, um eine Druckplatte zu erhalten,
wobei, basiert auf dem Gesamtgewicht der UV-aushärtbaren Tinte, die UV-aushärtbare Tinte besteht aus:
| | |
|---|---|
| Monomer mit UV-reaktiven Gruppen | 20 bis 90 Gew.-% |
| acrylatbasiertem Vorpolymer | 1 bis 40 Gew.-% |
| Photoinitiator | 0,1 bis 5 Gew.-% |
| Farbmittel | 0,01 bis 5 Gew.-% |
| Dispergiermittel | Rest, |
wobei das Monomer mit UV-reaktiven Gruppen mindestens eines ist, das aus der Gruppe ausgewählt ist, die aus Acryloylmorpholin, monofunktionellem acrylatbasiertem Monomer, bifunktionellem acrylatbasiertem Monomer und multifunktionellem acrylatbasiertem Monomer besteht, wobei das monofunktionelle acrylatbasierte Monomer mindestens eines ist, das aus der Gruppe ausgewählt ist, die aus Hydroxyethylacrylat, Hydroxypropylacrylat, Laurylacrylat, Octadecylacrylat, 2-Ethylhexylacrylat, Butylacrylat, ethoxyliertem Cyclohexylacrylat, Isobornylacrylat, Epoxidacrylat, Ethylethoxyacrylat, Neopentylglycolbenzoatacrylat, 2-Phenoxyethylmethacrylat und Nonylphenoxypolyethylenglycolacrylat besteht;
wobei das bifunktionelle acrylatbasierte Monomer mindestens eines ist, das aus der Gruppe ausgewählt ist, die aus Polyethylenglycol-(200)-diacrylat, Polyethylenglycol-(400)-diacrylat, Polyethylenglycol-(600)-diacrylat, Tripropylenglycoldiacrylat, Dipropylenglycoldiacrylat, Propylenglycoldiacrylat, Neopentylglycoldiacrylat, propoxyliertem (2) Neopentylglycoldiacrylat, 1,3-Butandioldiacrylat, Phthalatdiglycoldiacrylat, Phthalattripropylenglycoldiacrylat, Ethylenglycoldiacrylat, Diethylenglycoldiacrylat, Triethylenglycoldiacrylat, Tetraethylenglycoldiacrylat, 1,6-Hexandioldiacrylat, ethoxyliertem 1,6-Hexandioldiacrylat, 1,4-Butandioldiacrylat und ethoxyliertem (4) Bisphenol-A-diacrylat besteht;
wobei das multifunktionelle acrylatbasierte Monomer mindestens eines ist, das aus der Gruppe ausgewählt ist, die aus Trimethylolpropantriacrylat, Ethylenoxid-modifiziertem Trimethylolpropantriacrylat, ethoxyliertem Trimethylolpropantriacrylat, propoxyliertem Trimethylolpropantriacrylat, propoxyliertem (3) Glycerintriacrylat, Pentaerythrittetraacrylat, Pentaerythrittriacrylat und Dipentaerythritpentaacrylat besteht.

2. Verfahren nach Anspruch 1, wobei das acrylatbasierte Vorpolymer mindestens eines ist, das aus der Gruppe ausgewählt ist, die aus Polyurethanacrylat-Vorpolymer, Polyesteracrylat-Vorpolymer, Polyetheracrylat-Vorpolymer, hyperverzweigtem acrylatbasiertem Vorpolymer und Epoxidacrylat-Vorpolymer besteht.

3. Verfahren nach Anspruch 1, wobei der Photoinitiator mindestens einer ist, der aus der Gruppe ausgewählt ist, die aus Benzoinisobutylether, Benzoinethylether, 2,4-Diethylacetophenon, 2-Isopropylacetophenon, Diethyl-2,4,6-trimethylbenzoylphosphat, Diphenyl-2,4,6-trimethylbenzoylphosphinoxid, Diphenyl-6-trimethylbenzoylphosphinoxid, 2-Phenyl-2,2-dimethylamino-1-(4-morpholinylphenyl)-1-butanon, Di(2,4,6-trimethylbenzoyl)phenylphosphinoxid, Di(2,6-dimethoxybenzoyl)-(4',4'-dimethyloctyl-2)phosphinoxid, Di(2,6-dimethoxybenzoyl)-2,4,4-trimethyl-pentylphosphinoxid, 1-Hydroxy-cyclohexylphenylketon, Phenyldimethylketal, 2-Hydroxy-2-methylphenylaceton, 2-Hydroxy-2-methyl-p-ethoxyletherphenylaceton, 1-(4-Isopropylphenyl)-2-hydroxy-2-methylaceton, 4-p-Toluolthiobenzophenon, 2-Methyl-1-(4-methylthiophenyl)-2-morpholin-1-aceton, 2,2-Dimethoxybenzophenon, 2-Isopropylthioxanthon, Benzophenon, 2,4,6-Trimethylbenzophenon, 4-Methylbenzophenon, 4-Phenylbenzophenon, 4,4'-Di(dimethylamino)benzophenon, 4,4-Di(diethylamino)benzophenon, 2-Methylformiatbenzophenon, 2,4-Diethylthioxanthon, 2-Chlorthioxanthon und 2-Ethylanthrachinon besteht.

4. Verfahren nach Anspruch 1, wobei das Farbmittel Pigment oder Farbstoff ist.

5. Verfahren nach Anspruch 4, wobei das Pigment eines ist, das aus der Gruppe ausgewählt ist, die aus Gelb 1, Gelb 3, Gelb 12, Gelb 13, Gelb 14, Gelb 17, Gelb 42, Gelb 74, Gelb 81, Gelb 83, Gelb 87, Gelb 93, Gelb 95, Gelb 109, Gelb 120, Gelb 128, Gelb 138, Gelb 139, Gelb 150, Gelb 151, Gelb 166, Gelb 180, Gelb 185, Orange 16, Orange 36, Orange 38, Rot 5, Rot 22, Rot 38, Rot 48:1, Rot 48:2, Rot 48:4, Rot 49:1, Rot 53:1, Rot 57:1, Rot 63:1, Rot 101, Rot 122, Rot 144, Rot 146, Rot 177, Rot 185, Violett 19, Violett 23, Blau 15:1, Blau 15:3, Blau 15:4, Blau 18, Blau 27, Blau 19, Blau 60, Grün 7, Grün 36, Weiß 6, Weiß 18, Weiß 21 und Schwarz 7 besteht;
wobei der Farbstoff einer ist, der aus der Gruppe ausgewählt ist, die aus Ölgelb, Ölrot G, Öl-Purpurrot, Ölblau B, Ölblau, Solvent-Blue RS, Anilinschwarz, Ölschwarz, Solvent-Black 827 und Solvent-Black 834 besteht.

6. Verfahren nach Anspruch 1, wobei das Dispergiermittel mindestens eines ist, das aus der Gruppe ausgewählt ist, die aus Disperbyk 101, Disperbyk 107, Disperbyk 110, Disperbyk 111, Disperbyk 130, Disperbyk 161, Disperbyk 162, Disperbyk 163, Disperbyk 164, Disperbyk 165, Disperbyk 166, Disperbyk 168, Disperbyk 170, Disperbyk 180, Disperbyk 400, Disperbyk 9076, Disperbyk 9077, Efka 44, Efka 46, Efka 47, Efka 48, Efka 49, Efka 54, Efka 63, Efka 64, Efka 65, Efka 66, Efka 71, Efka 701, Efka 766, Solsperse 5000, Solsperse 13940, Solsperse 17000, Solsperse 22000, Solsperse 24000, Solsperse 32000, Solsperse 33000, Solsperse 39000, Solsperse 41000 und Solsperse 53000 besteht.

## Revendications

1. Procédé de fabrication directe de plaques d'impression par impression à jet d'encre, comprenant les étapes de: pulvériser de l'encre UV par une imprimante à jet d'encre sur la surface d'un substrat vierge ou d'un substrat revêtu pour former des images, de manière à obtenir un substrat vierge pulvérisé ou un substrat pulvérisé revêtu, et
sécher le substrat vierge pulvérisé ou le substrat pulvérisé revêtu sous une lumière ultraviolette ayant une longueur d'onde de 300 à 450 nm pour 1 à 60 secondes, pour obtenir une plaque d'impression,
dans lequel, par rapport au poids total de l'encre UV, l'encre UV est composé de :
20 à 90% en poids d'un monomère comprenant des groupes réagissant aux UV ;
1 à 40% en poids d'un prépolymère d'acrylate ;
0,1 à 5% en poids d'un photoamorceur ;
0,01 à 5% en poids d'un colorant ;
le reste étant un dispersant
le monomère avec les groupes réagissant aux UV est au moins un monomère dans le groupe constitué par acryloylmorpholine, monomère d'acrylate monofonctionnel, monomère d'acrylate bifonctionnel et monomère d'acrylate polyfonctionnel,
le monomère d'acrylate monofonctionnel est au moins un choisi dans le groupe constitué par acrylate d'hydroxyéthyle, acrylate d'hydroxypropyle, acrylate de lauryle, acrylate d'octadécyle, 2-ethylhexyl acrylate, butyl acrylate, ethoxylated cyclohexyl acrylate, isobornyl acrylate, epoxy acrylate, ethyl ethoxy-acrylate, neopentyl glycol benzoate acrylate, 2-phenoxy-ethyl methacrylate, and nonyl-phenoxy polyethylene glycol acrylate ;
le monomère d'acrylate bifonctionnel est au moins un choisi dans le groupe constitué par diacrylate de polyéthylène glycol 200, diacrylate de polyéthylène glycol 400, diacrylate de polyéthylène glycol 600, diacrylate de tripropylène glycol, diacrylate de dipropylène glycol, diacrylate de propylène glycol, diacrylate de néopentyl glycol, diacrylate de néopentyl glycol propoxylé (2), diacrylate de 1,3-butanediol, diacrylate de phthalate diglycol, diacrylate de phthalate tripropylene glycol, diacrylate d'éthylène glycol, diacrylate de diéthylène glycol, diacrylate de triéthylène glycol, diacrylate de tétraéthylène glycol, diacrylate de 1,6-héxanediol, diacrylate de 1,6-hexanediol éthoxylé, diacrylate de 1,4-butanediol, et diacrylate de bisphénol A ethoxylé (4) ;
le monomère multifonctionnel est au moins un choisi dans le groupe constitué par triacrylate de triméthylolpropane, triacrylate de triméthylolpropane modifié à l'oxyde d'éthylène, triacrylate de triméthylolpropane ethoxylé, triacrylate de triméthylolpropane propoxylé, triacrylate de glycérol propoxylé (3), tétracrylate de pentaérythritol, triacrylate de pentaérythritol, et pentaacrylate de dipentaérythritol.

2. Procédé selon la revendication 1, dans lequel le prépolymère d'acrylate est au moins un choisi dans le groupe constitué par le prépolymère d'acrylate de polyuréthane, le prépolymère d'acrylate de polyester, le prépolymère d'acrylate de polyéther, le prépolymère d'acrylate hyperbranché, et le prépolymère d'époxy acrylate.

3. Procédé selon la revendication 1, dans lequel le photoamorceur est au moins un choisi dans le groupe constitué par benzoin isobutyl éther, benzoin éthyl éther, 2,4-diéthyl acétophénone, 2-isopropyl acétophénone, diéthyl 2,4,6-triméthyl benzoyl phosphate, oxyde de diphényl 2,4,6-triméthylbenzoyl phosphine, oxyde de diphényl 6-triméthylbenzoyl phosphine, 2-phényl-2,2-diméthylamino- 1 -(4-morpholinyl phényl)- 1 - butanone, oxyde de di(2,4,6-triméthylbenzoyl) phényl phosphine, oxyde de di(2,6-diméthoxy benzoyl)-(4',4'-diméthyl octyl-2) phosphine, oxyde de di(2,6-diméthoxy benzoyl)-2,4,4-triméthyl pentyl phosphine, 1-hydroxy-cyclohéxyl phényl cétone, phenyl dimethyl cétal, 2-hydroxy-2-méthylphényl acetone, 2-hydroxy-2-méthyl-p-éthoxyl éther
phényl acetone, 1 -(4-isopropyl phényl)-2-hydroxy-2-méthyl acetone, 4-*p*-toluène thiobenzophénone, 2-méthyl- 1 -(4-méthyl thiophényl)-2-morpholine- 1-acetone, 2,2-diméthoxy benzophénone, 2-isopropyl thioxanthone, benzophénone, 2,4,6-triméthyl benzophénone, 4-méthyl benzophénone, 4-phényl benzophénone, 4,4'-di(diméthylamino) benzophénone, 4,4,-di(diéthylamino) benzophénone, 2-méthyl formate benzophénone, 2,4-diéthyl thioxanthone, 2-chlorothioxanthone, et 2-éthyl anthraquinone.

4. Procédé selon la revendication 1, dans lequel le colorant est un pigment ou une teinture.

5. Procédé selon la revendication 4, dans lequel le pigment est un choisi dans le groupe constitué par jaune-1, jaune-3, jaune-12, jaune-13, jaune-14, jaune-17, jaune-42, jaune-74, jaune-81, jaune-83, jaune-87, jaune-93, jaune-95, jaune-109, jaune-120, jaune-128, jaune-138, jaune-139, jaune-150, jaune-151, jaune-166, jaune-180, jaune-185, orange-16, orange-36, orange-38, rouge-5, rouge-22, rouge-38, rouge-48:1, rouge-48:2, rouge-48:4, rouge-49:1, rouge-53:1, rouge-57:1, rouge-63:1, rouge-101, rouge-122, rouge-144, rouge-146, rouge-177, rouge-185, pourpre-19, pourpre-23, bleu-15:1, bleu-15:3, bleu-15:4, bleu-18, bleu-27, bleu-19, bleu-60, vert-7, vert-36, blanc-6, blanc-18, blanc-21, et noir-7;
la teinture est choisie dans le groupe constitué par hule rouge, huile rouge G, huile rouge pourpre, huile bleu B, huile bleu, solvant bleu RS, noir d'aniline, huile noir, solvant noir 827, et solvant noir 834.

6. Procédé selon la revendication 1, dans lequel le dispersant est au moins un choisi dans le groupe constitué par Disperbyk 101, Disperbyk 107, Disperbyk 110, Disperbyk 111, Disperbyk 130, Disperbyk 161, Disperbyk 162, Disperbyk 163, Disperbyk 164, Disperbyk 165, Disperbyk 166, Disperbyk 168, Disperbyk 170, Disperbyk 180, Disperbyk 400, Disperbyk 9076, Disperbyk 9077, Efka 44, Efka 46, Efka 47, Efka 48, Efka 49, Efka 54, Efka 63, Efka 64, Efka 65, Efka 66, Efka 71, Efka 701, Efka 766, Solsperse 5000, Solsperse 13940, Solsperse 17000, Solsperse 22000, Solsperse 24000, Solsperse 32000, Solsperse 33000, Solsperse 39000, Solsperse 41000, et Solsperse 53000.
